(19) Europäisches Patentamt
European Patent Office
Office européen des brevets

(11) Veröffentlichungsnummer: **0 045 868**
**B1**

(12) # EUROPÄISCHE PATENTSCHRIFT

(45) Veröffentlichungstag der Patentschrift: **07.03.84**

(51) Int. Cl.³: **C 09 B 45/24** // D06P1/10, D06P3/02, C09B33/044

(21) Anmeldenummer: **81105683.7**

(22) Anmeldetag: **20.07.81**

(54) **Metallkomplexfarbstoffe und ihre Verwendung zum Färben stickstoffhaltiger Materialien.**

(30) Priorität: **01.08.80 DE 3029271**

(43) Veröffentlichungstag der Anmeldung: **17.02.82 Patentblatt 82/7**

(45) Bekanntmachung des Hinweises auf die Patenterteilung: **07.03.84 Patentblatt 84/10**

(84) Benannte Vertragsstaaten: **CH DE FR GB IT LI**

(56) Entgegenhaltungen:
**DE - C - 707 225**
**DE - C - 855 142**
**GB - A - 424 262**
**US - A - 2 042 810**
**US - A - 2 111 559**

(73) Patentinhaber: **BAYER AG, Konzernverwaltung RP Patentabteilung, D-5090 Leverkusen 1 Bayerwerk (DE)**

(72) Erfinder: **Mennicke, Winfried, Dr., Steglitzerstrasse 8, D-5090 Leverkusen 1 (DE)**
Erfinder: **Goebel, Hermann, Dr., Fontanestrasse 19, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

Metallkomplexfarbstoffe und ihre Verwendung zum Färben stickstoffhaltiger Materialien

Gegenstand der vorliegenden Erfindung sind Metallkomplexe, insbesondere die Kupfer-, Eisen-und Nickelkomplexe von Disazofarbstoffen der Formel

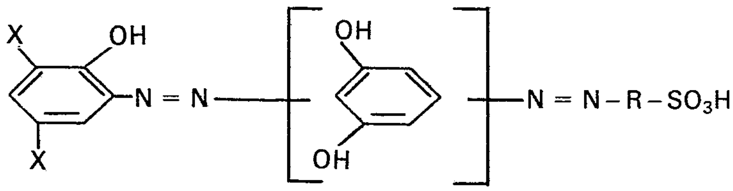

worin

ein X Chlor und das andere X Nitro oder beide X Chlor

und R den Rest einer von metallkomplexbildenden Gruppen in o-Stellung zur Azogruppe freien Diazokomponente der Benzol-, Naphthalin- oder Diphenylaminreihe bedeuten, und deren Mischungen, wobei die Azogruppen nicht in m-Position zu den OH-Gruppen des Resoreinrestes stehen.

Die Diazokomponenten $H_2N–R–SO_3H$ können weitere übliche Substituenten enthalten, beispielsweise $NO_2$, Cl, $C_1–C_4$-Alkyl, $C_1–C_4$-Alkoxy, $SO_3H$ oder ein nicht in o-Stellung zur Azogruppe stehendes COOH.

Bevorzugte Diazokomponenten $H_2N–R–SO_3H$ sind solche der Formel (II), (III) und (IV).

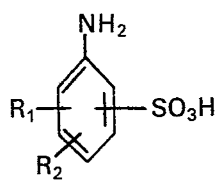

(II)

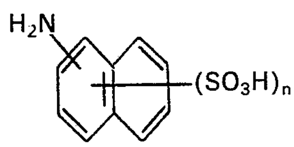

(III)

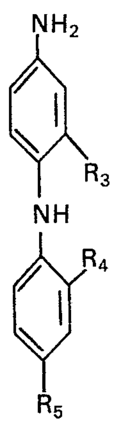

(IV)

worin

$R_1$, $R_2$ Wasserstoff, Cl, $CH_3$, $OCH_3$, $SO_3H$, $NO_2$ oder nicht in o-Stellung zur Azogruppe stehendes COOH

n 1 oder 2

$R_3$ Wasserstoff oder $SO_3H$

$R_4$, $R_5$ Wasserstoff oder einer der beiden Reste $R_4$, $R_5$ Wasserstoff und der andere Cl oder $OCH_3$ oder einer der beiden Reste $R_4$, $R_5NO_2$ und der andere $SO_3H$ bedeuten.

Die erfindungsgemässen Metallkomplexfarbstoffe können hergestellt werden, indem man Resorcin in beliebiger Reihenfolge mit einem diazotierten Amin der Formel (V)

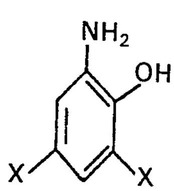

(V)

und mit einem diazotierten Amin der Formel $H_2N–R–SO_3H$ beispielsweise einem solchen der Formel (II), (III) oder (IV) ankuppelt und die erhaltenen Disazofarbstoffe der Formel (I) mit einer geeigneten Metallverbindung oder einem Gemisch geeigneter Metallverbindungen umsetzt.

Die Disazofarbstoffe der Formel (I) können, bedingt durch die unterschiedliche Reihenfolge der Kupplungen und die beiden möglichen Kupplungsstellen die Verbindungen (VI), (VII) oder (VIII) oder Gemische aus diesen Verbindungen darstellen.

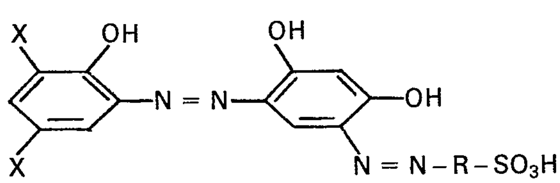

(VI)

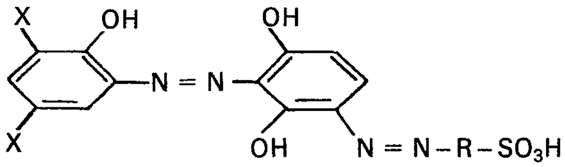

(VII)

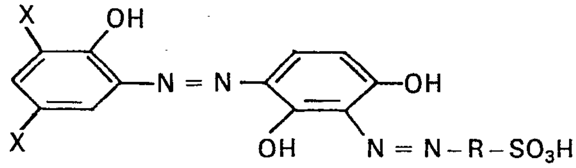

(VIII)

Vorzugsweise kuppelt man Resorcin zuerst mit den eine geringere Kupplungsenergie aufweisenden Aminen (V). In diesem Fall kann die Metallisierung vor die Kupplung mit den Aminen (II), (III) oder (IV) gelegt werden. Erstkupplung mit den Aminen (V) und Metallisierung oder Zweitkupplung mit diesen Aminen und Metallisierung können auch in einem Schritt erfolgen. Beispielsweise kann Resorcin und eine geeignete Metallverbindung entsprechend der US-Patentschrift 2 042 810 vorgelegt und das Gemisch erst mit den Aminen (V) und dann mit den Aminen (II), (III) oder (IV) angekuppelt werden.

Die Kupplung kann nach an sich bekannten Methoden in basischem wässrigem Medium bei pH-Werten von 7,5 bis 14, vorzugsweise bei pH 9–10, und Temperaturen bei 0° bis etwa 30°C, vorzugsweise bei 5–10°C, durchgeführt werden.

Die Metallisierung erfolgt in an sich bekannter Weise in wässrigem oder wässrig-organischem Milieu bei Temperaturen von 20–100°C unter Normaldruck bei einem pH von 3–12, vorzugsweise 4–10. Sie findet bevorzugt in Gegenwart von Säureakzeptoren statt, beispielsweise von Carbonaten, Hydrogencarbonaten, Oxiden und Hydroxiden, von Alkali- und Erdalkalimetallen, wie $Li_2CO_3$, $Na_2CO_3$, $K_2CO_3$, $LiHCO_3$, $NaHCO_3$, $KHCO_3$, LiOH, NaOH, KOH, MgO oder CaO oder von alkalisch wirkenden Salzen von Alkalimetallen, wie Natrium- oder Kaliumacetat, oder von Ammoniak oder niedrig alkylsubstituierten Aminen. Als Lösungsmittel können niedere Alkohole, wie Ethanol, Carbonamide wie Formamid oder Dimethylformamid, Ethylenglykol oder dessen Mono-$C_1$-$C_4$-Alkylether zugesetzt werden. Geeignete Metallverbindungen sind hauptsächlich die Kupfer-, Eisen- und Nickelsalze von anorganischen oder organischen Säuren.

Geeignete Kupfersalze sind Kupfercarbonat, Kupferchlorid, Kupfersulfat, Kupferacetat und Kupferformiat. Die Kupferung erfolgt im allgemeinen bei 80–100°C unter schwach sauren oder bei 20–100° unter schwach alkalischen Bedingungen vorzugsweise in Gegenwart von so viel Ammoniak, dass das Kupfersalz als Tetraminkomplex gelöst ist.

Als Eisenverbindung dienen z.B. Eisen-II- oder Eisen-III-chlorid, -sulfat oder -nitrat. Zur Einführung von Nickel verwendet man zweckmässig Nickelchlorid, Nickelsulfat, Nickelacetat oder Nickelformiat.

Die Verwendung von verschiedene Metalle abgebenden Mitteln führt zu gemischten Metallkomplexverbindungen. Diese können einstufig oder nacheinander unter den für die Metalle optimalen pH- und Temperaturbedingungen hergestellt werden.

Bei den Nickel- und Kupferkomplexen sind die 1:1-Komplexe bevorzugt, bei den Eisenkomplexen die 1:2-Komplexe.

Die Eisen-1:2-Komplexe besitzen die allgemeine Formel (IX).

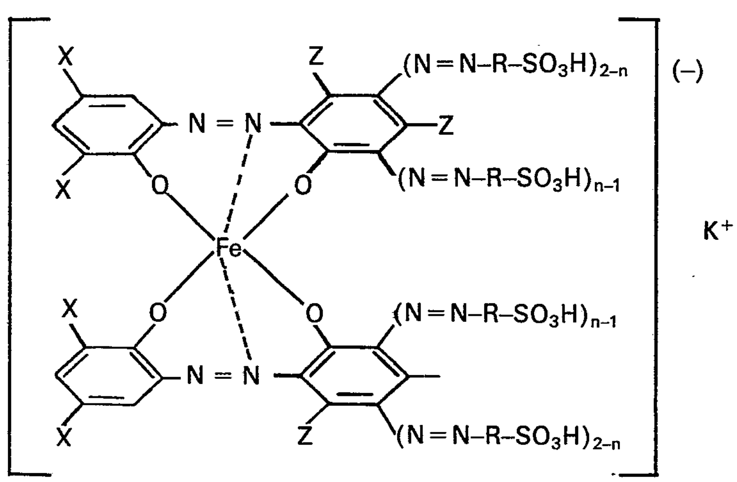

(XI)

worin

X und R die gleiche Bedeutung haben wie in Formel (I),

ein Z Wasserstoff, das andere Z Hydroxyl und

n 1 oder 2 bedeuten und

$K^+$ für ein Kation, insbesondere ein Alkali-, Erdalkali- oder Ammoniumkation oder für ein protoniertes Alkylamin, insbesondere $C_1$-$C_4$-Alkylamin steht.

Die Nickel- und Kupferkomplexe entsprechen der allgemeinen Formel (X),

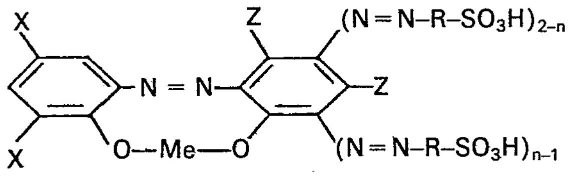

(X)

worin

Me Kupfer oder Nickel bedeutet.

Die neuen Metallkomplexfarbstoffe können durch Sprühtrocknen oder durch Ausfällen mit Elektrolyten, wie Natrium- oder Kaliumchlorid, isoliert werden. Sie sind wertvolle, wasserlösliche Farbstoffe, insbesondere zum Färben und Bedrucken stickstoffhaltiger Materialien, wie Seide, Wolle, synthetische Fasern aus Polyamiden oder Polyurethanen.

Vorzugsweise eignen sie sich zum Färben von Ledern verschiedener Gerbungsart. Sie lassen sich aus schwach alkalischem, z.B. ammonialkalischem, neutralem oder schwach saurem, z.B. essigsaurem, Bad färben und ergeben Färbungen in lebhaften Brauntönen mit ausgezeichneten Echtheitseigenschaften.

Mit Aminen, wie Cyclohexylamin, Dicyclohexylamin oder Arylguanidinen behandelt, ergeben die erfindungsgemässen Metallkomplexfarbstoffe Salze, die sich in organischen Lösungsmitteln lösen, und deren Lösungen beispielsweise in Alkoholen, Diolen oder Ketonen zum Spritzfärben von Leder geeignet sind.

Die angegebenen Formeln sind die der freien Säuren. Im allgemeinen setzt man die Salze, insbesondere die Alkalisalze wie die Natriumsalze ein. Der nächste Stand der Technik ist durch die DE-PS 707 225 gegeben. Die erfindungsgemässen Farbstoffe zeigen demgegenüber überraschend bessere Eigenschaften.

Beispiel 1

18,85 g 4-Nitro-6-chlor-2-aminophenol werden in einem Gemisch aus 100 ml Wasser und 100 g Eis mit 14 ml 30%iger Salzsäure versetzt und innerhalb von 20 Minuten mit 23 ml einer 4,35n Natriumnitritlösung diazotiert. Man rührt die Suspension des Diazoniumsalzes eine halbe Stunde weiter und zerstört dann eventuell überschüssige salpetrige Säure mit etwas Amidosulfonsäure. Die Lösung von 11 g Resorcin und 28 g Soda calc. in 200 ml Eiswasser wird bei 0°C mit der Diazoniumverbindung vereinigt. Die Kupplung ist sofort beendet. 17,3 g p-Sulfanilsäure werden in 100 ml Wasser und 10 ml 10n Natronlauge gelöst und mit 28 ml 30%iger Salzsäure gefällt. Man setzt 120 g Eis zu, diazotiert im Verlauf von 15 Minuten mit 23 ml einer 4,35n Natriumnitritlösung, zerstört eine halbe Stunde später überschüssige salpetrige Säure und lässt die Suspension der Diazoniumverbindung in die Suspension des Monoazofarbstoffes einlaufen. Nach etwa einer Stunde Rühren bei pH 8,5 ist die zweite Kupplung beendet.

Die entstandene Suspension des Disazofarbstoffs der Formel

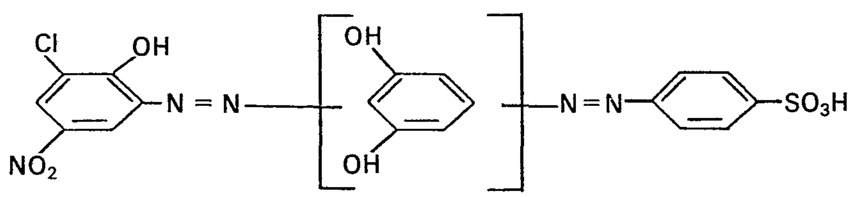

wird nach Zugabe von 20 g wasserfreiem Natriumacetat auf 70°C erwärmt und 1 Stunde lang bei dieser Temperatur mit 25 g $CuSO_4.5H_2O$ behandelt. Der gebildete Kupferkomplex wird durch Zusatz von 20 Gew.-% Natriumchlorid ausgesalzen, abgesaugt und getrocknet. Er stellt ein braunes Pulver dar, welches Leder in rotstichig braunen Tönen von guter Lichtechtheit und guten Gebrauchsechtheiten färbt.

Beispiel 2

Der unter den gleichen Bedingungen gewonnene Disazofarbstoff des Beispiels 1 wird eine Stunde lang bei 80° in.Gegenwart von 20 g wasserfreiem Natriumacetat mit 27 g $FeCl_3.6H_2O$ metallisiert. Nach Aussalzen, Abfiltrieren und Trocknen erhält man ein dunkelbraunes Pulver, das auf Leder ergiebige, olivbraune Färbungen mit guten Echtheiten liefert.

Beispiel 3

Die gleiche Menge des unter Beispiel 1 beschriebenen Disazofarbstoffes wird in Gegenwart von 20 g wasserfreiem Natriumacetat bei 80°C erst 15 Minuten lang mit 5 g $CuSO_4.5H_2O$ dann 30 Minuten lang mit 22 g $FeCl_3.6H_2O$ behandelt. Es resultiert ein weniger grünstichiger klarer Braunfarbstoff mit gutem Aufbauvermögen auf Leder.

Ändert man die Reihenfolge der Metallisierung oder metallisiert man den Disazofarbstoff des Beispiels 1 mit einem Gemisch aus 5 g $CuSO_4.5H_2O$ und 22 g $FeCl_3.6H_2O$, so erhält man Mischmetallkomplexfarbstoffe mit ähnlichen Eigenschaften auf Leder.

Beispiel 4

Ersetzt man die 20 g wasserfreies Natriumacetat und die 25 g $CuSO_4.5H_2O$ des Beispiels 1 gegen 24,9 g $Ni(CH_3COO)_2.4H_2O$ und metallisiert

2 Stunden lang bei 70°C und pH 6,5, so erhält man den entsprechenden Nickelkomplex, der Leder in einem gelberen, kalreren Ton färbt.

Beispiel 5

Ersetzt man in Beispiel 1 17,3 g p-Sulfanilsäure gegen die entsprechende Menge der nachstehend aufgeführten Amine der Formel (II), so erhält man Disazofarbstoffe der allgemeinen Formel (XI):

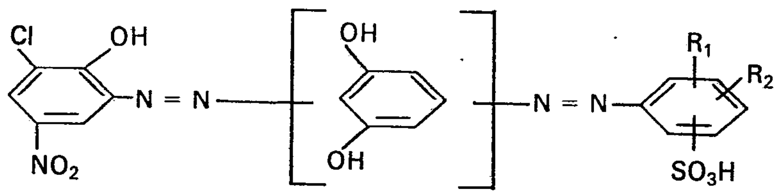

(XI)

Amine der Formel II:

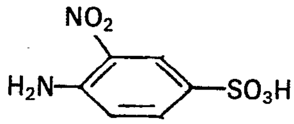 , 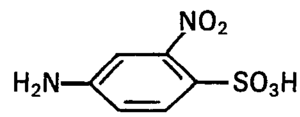 ,

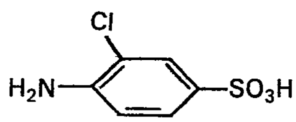 , 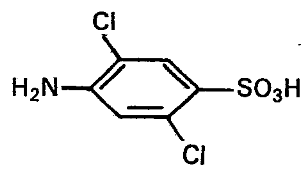 ,

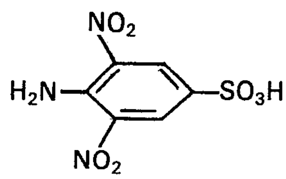 , 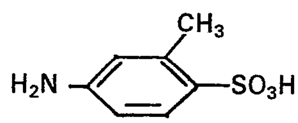 ,

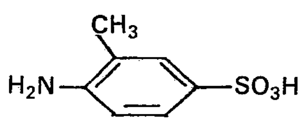 , 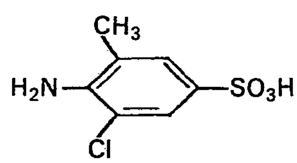 ,

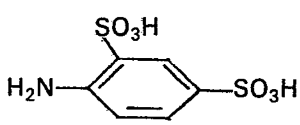 , 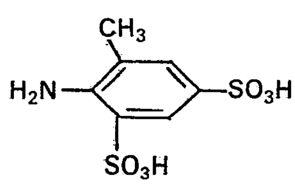 ,

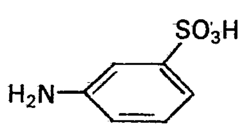 , 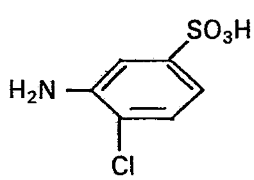 ,

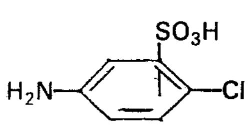 , 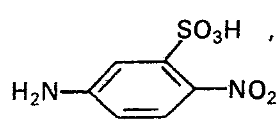 ,

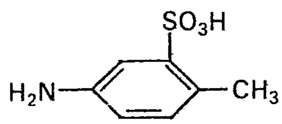 , 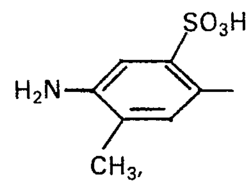

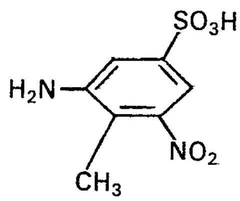 , 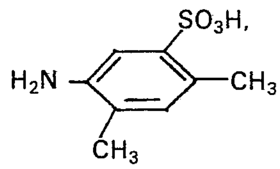

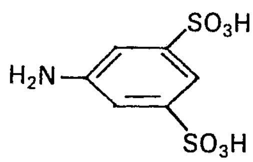 , 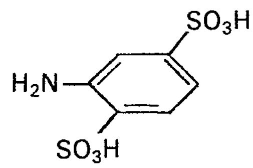

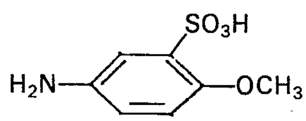 , 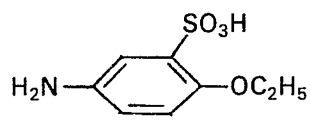 ,

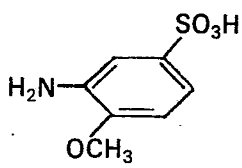 , 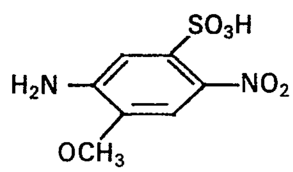 ,

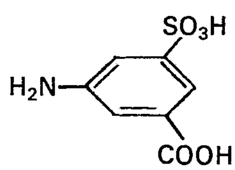

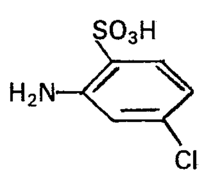 , 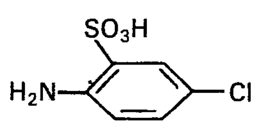 ,

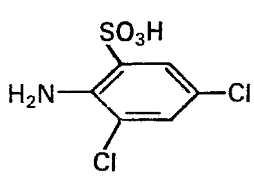 , 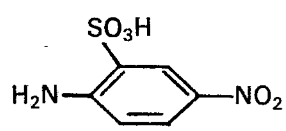 ,

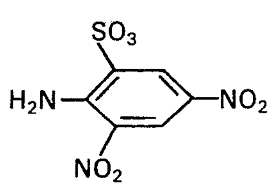 , 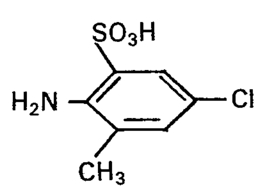 ,

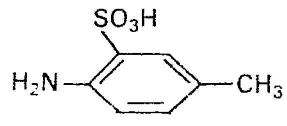 , 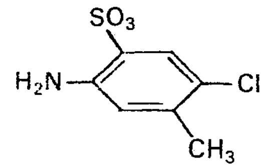 ,

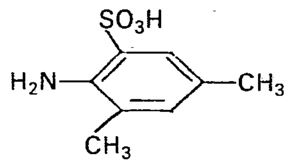 , 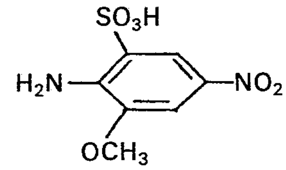

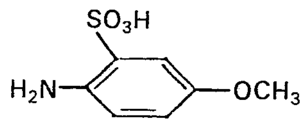 , 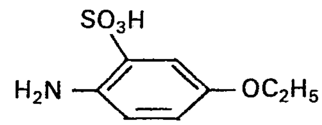 ,

Mit kupferabgebenden Mitteln metallisiert, ergeben die Disazofarbstoffe (XI) rotbraune Kupferkomplexe mit ähnlichen Eigenschaften auf Leder wie der Farbstoff des Beispiels 1. Die Eisenkomplexe entsprechen in ihren Eigenschaften denen des Farbstoffes des Beispiels 2, die Kupfer/Eisen-Mischkomplexe denen des Beispiels 3, die Nickelkomplexe denen des Beispiels 4.

Beispiel 6

22,3 g 1-Amino-6-naphthalinsulfonsäure werden in 200 ml Wasser durch Zutropfen von 10 ml 10n Natronlauge gelöst und durch Zutropfen von 28 ml 30%iger Salzsäure wieder gefällt. Nach Zugabe von 200 g Eis lässt man innerhalb von 15 Minuten 23 ml einer 4,35n Natriumnitritlösung zutropfen. Eine halbe Stunde später wird überschüssige salpetrige Säure mit Amidosulfonsäure entfernt und die Suspension des gebildeten Diazoniumsalzes mit dem Monoazofarbstoff aus 18,85 g diazotiertem 4-Nitro-6-chlor-2-aminophenol und 11 g Resorcin vereinigt. Die Kupplung in sodaalkalischer Lösung zum Disazofarbstoff der Formel

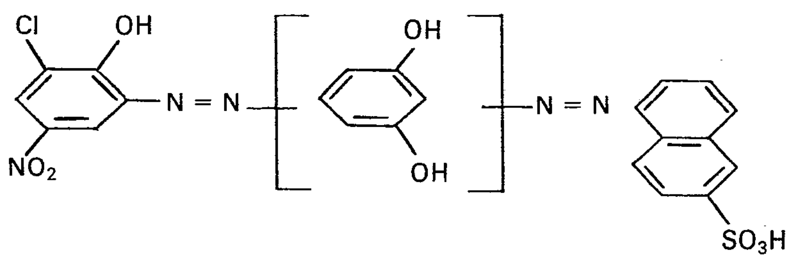

ist nach etwa zwei Stunden beendet.

Der durch Umsetzung mit Kupferacetat gewonnene Kupferkomplex ist, auf Leder gefärbt, röter als der unter Beispiel 1 beschriebene Kupferkomplex; der Eisenkomplex ist gelber, weniger grün als der Eisenkomplex des Beispiels 2. Die Kupfer/Eisen-Mischkomplexe sind ergiebige, lichtechte dunkelbraune Lederfarbstoffe.

Zu ähnlichen, rotbraunen und dunkelbraunen Lederfarbstoffen gelangt man, wenn man anstelle der 22,3 g 1-Amino-6-naphthalinsulfonsäure äquivalente Mengen der nachstehend aufgeführten Naphthylaminsulfonsäuren verwendet und die gebildeten Disazofarbstoffe der Formel

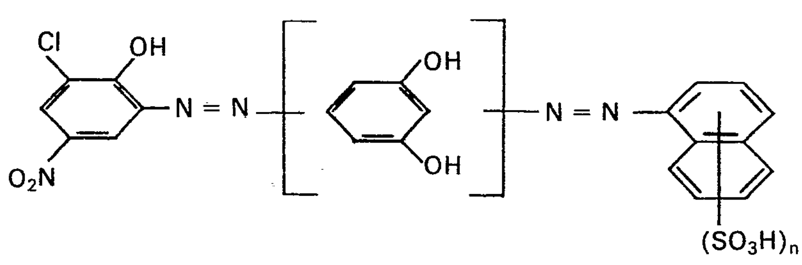

worin n 1 oder 2 bedeutet, mit kupfer-, nickel- oder eisenabgebenden Mitteln behandelt:

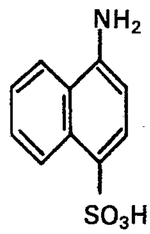 , 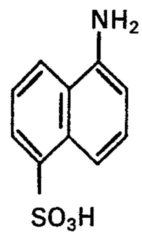 , 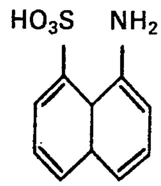 ,

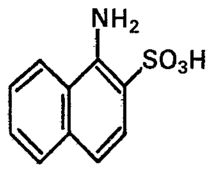 , 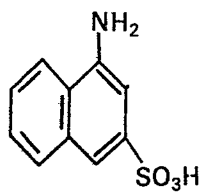 , 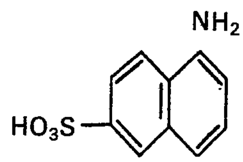 ,

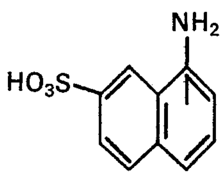 , 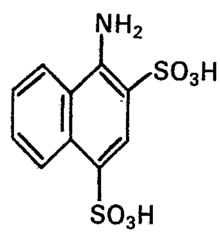 , 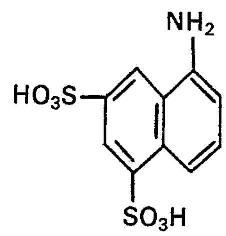 ,

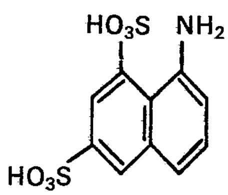 , 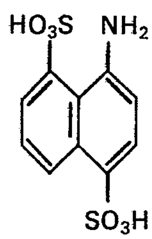 , 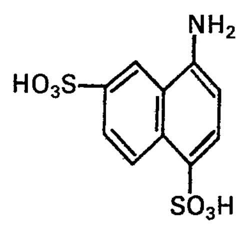 ,

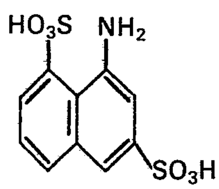 , 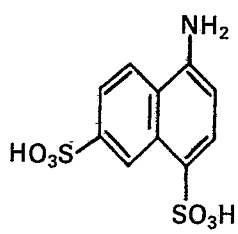 , 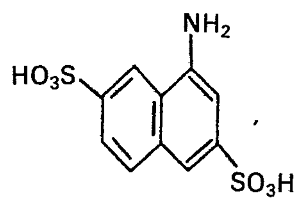 ,

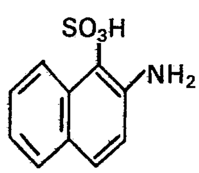 , 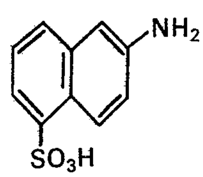 , 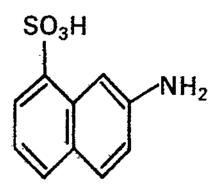

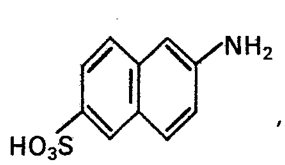 , 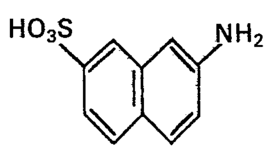 , 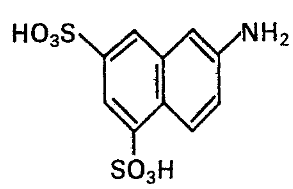

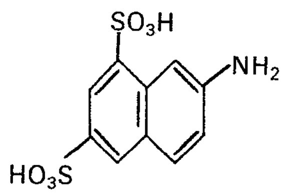
,
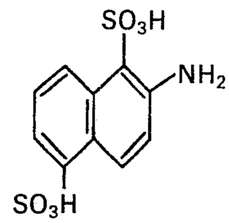
,
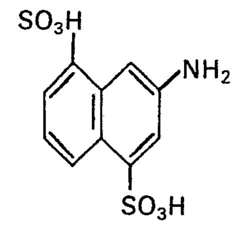

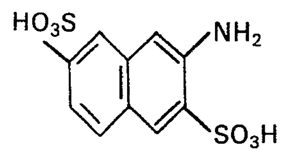
,
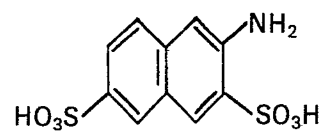

Beispiel 7

26,4 g 4-Amino-2-sulfonsäurediphenylamin werden in 200 ml Wasser mit 10 ml 10n Natronlauge verrührt. Die neutrale Lösung wird mit 23 ml 4,35 n Natriumnitritlösung vermischt und innerhalb von 20 Minuten auf das Gemisch von 30 ml 30%iger Salzsäure und 250 g Eis ausgetragen. Nachdem eine Stunde nachgerührt worden ist, wird überschüssige salpetrige Säure mit Amidosulfonsäure zerstört und die Suspension des Diazoniumsalzes mit dem Monoazofarbstoff aus 18,85 g diazotiertem 4-Nitro-6-chlor-2-aminophenol und 11 g Resorcin vereinigt. Die Kupplung ist bei schwach alkalischem pH nach etwa 2 Stunden beendet.

Der gebildete Disazofarbstoff der Formel

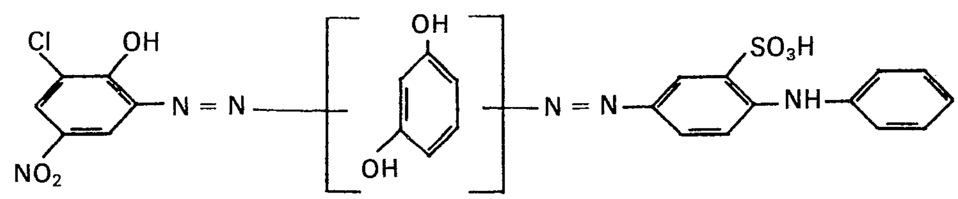

ist als Kupferkomplex ein rotstichig brauner Lederfarbstoff, im Farbton vergleichbar mit dem Kupferkomplex des Beispiels 6. Der Eisenkomplex ist ein neutrales Braun und weniger gelb als der Eisenkomplex des Beispiels 6. Die Eisen/Kupfer-Komplexe geben tiefbraune Färbungen auf Leder.

Metallkomplexfarbstoffe mit ähnlich erreichbaren Lederfärbungen können hergestellt werden, wenn man die 26,4 g 4-Amino-2-sulfonsäurediphenylamin gegen

29,85 g 4-Amino-4'-chlor-2-sulfonsäurediphenylamin,

29,4 g 4-Amino-4'-methoxy-2-sulfonsäurediphenylamin,

30,9 g 4-Amino-4'-nitro-2'-sulfonsäurediphenylamin oder

30,9 g 4-Amino-2'-nitro-4'-sulfonsäurediphenylamin austauscht.

Beispiel 8

18,85 g 4-Chlor-6-nitro-2-aminophenol werden in 150 ml Wasser und 14 ml 30%iger Salzsäure angerührt und nach Zugabe von 150 g Eis innerhalb von 15 Minuten mit 23 ml einer 4,35 n Natriumnitritlösung diazotiert. 30 Minuten später wird überschüssige salpetrige Säure mit Amidosulfonsäure entfernt und die Suspension der Diazoniumverbindung zur Lösung von 11 g Resorcin und 28 g Soda calc. gegeben. Die Kupplung ist sofort beendet. Der Monoazofarbstoff wird danach, wie in Beispiel 6 beschrieben, mit 22,3 g diazotierter 1-Amino-6-naphthalinsulfonsäure angekuppelt. Der entstandene Disazofarbstoff der Formel

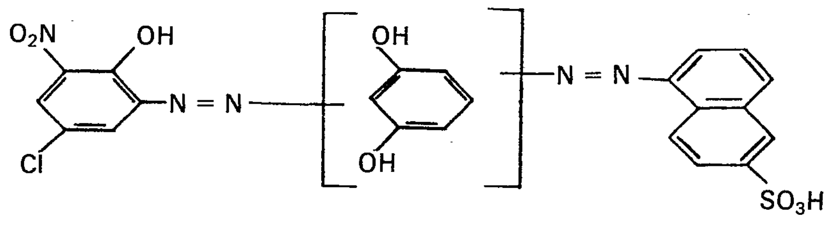

reagiert mit kupferabgebenden Mitteln zu einem klaren, rotstichig braunen Kupferkomplex, der echte Lederfärbungen liefert. Der Eisenkomplex färbt Leder in tiefbraunen Tönen, die weniger gelb sind als die des unter Beispiel 6 beschriebenen Eisenkomplexes.

Ersetzt man 1-Aminonaphthalin-6-sulfonsäure gegen andere in den vorangehenden Beispielen erwähnte Amine, wie p-Sulfanilsäure oder 4-Amino-4′-nitro-2′-sulfonsäurediphenylamin, so erhält man Lederfarbstoffe mit ähnlichen Eigenschaften.

Beispiel 9

21,45 g HCl-Salz von 4,6-Dichlor-2-aminophenol werden in 600 ml Wasser bei 90°C gelöst und nach Behandeln mit A-Kohle geklärt. Man lässt die Lösung auf Raumtemperatur abkühlen, setzt 7 ml 30%ige Salzsäure zu und diazotiert nach Zugabe von etwa 100 g Eis im Verlauf von 15 Minuten bei 10°C mit 23 ml einer 4,35 n Natriumnitritlösung. Die Diazotierung wird eine halbe Stunde nachgerührt, zur Entfernung überschüssiger salpetriger Säure mit Amidosulfonsäure versetzt und auf die Lösung von 11 g Resorcin und 42 g Soda calc. in 100 ml Wasser und 50 g Eis gekuppelt. Das Gemisch wird unmittelbar danach mit 22,3 g diazotierter 1-Aminonaphthalin-6-sulfonsäure zum Disazofarbstoff der Formel

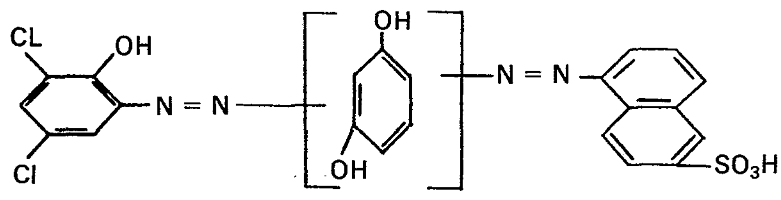

umgesetzt.

Der daraus hergestellte Kupferkomplex färbt Leder in geringfügig röteren Brauntönen als der Kupferkomplex des Beispiels 8. Der Eisenkomplex stimmt in der Nuance mit dem Eisenkomplexfarbstoff des Beispiels 8 überein.

Tauscht man die 1-Aminonaphthalin-6-sulfonsäure dieses Beispiels gegen eines der anderen in den obigen Beispielen erwähnten Amine, beispielsweise gegen p-Sulfanilsäure, 4-Nitroanilin-2-sulfonsäure oder 4-Aminodiphenylamin-2-sulfonsäure, aus, so erhält man rotstichig braune bis tiefdunkelbraune Lederfarbstoffe mit ähnlichen Eigenschaften.

**Patentansprüche**

1. Metallkomplexe von Disazofarbstoffen der Formel

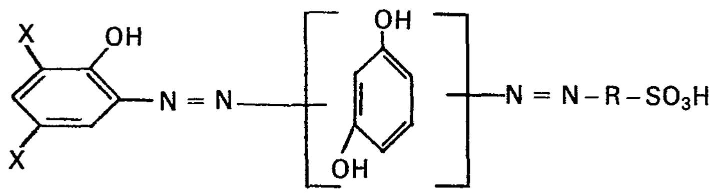

worin

ein X = Chlor, das andere X = $NO_2$ oder beide X = Chlor,

R = Rest einer von metallkomplexbildenden Gruppen in o-Stellung zur Azogruppe freien Diazokomponente der Benzol-, Naphthalin- oder Diphenylaminreihe, wobei die Azogruppen nicht in m-Position zu den OH-Gruppen des Resorcinrestes stehen.

2. Metallkomplexe des Anspruchs 1, worin

$-R-SO_3H$ =

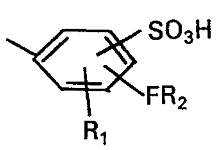

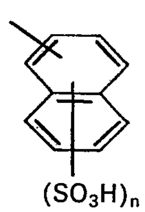

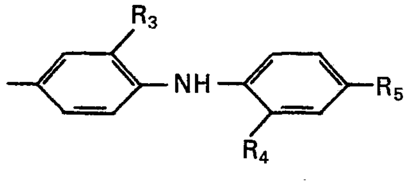

worin

$R_1$, $R_2$ = H, Cl, $CH_3$, $OCH_3$, $SO_3H$, $NO_2$ oder nicht in o-Stellung zur Azogruppe stehendes COOH

n = 1 oder 2

$R_3$ = H, $SO_3H$

$R_4$, $R_5$ = H, oder ein $R_4$ oder $R_5$ = H, der andere Cl oder $OCH_3$ oder ein $R_4$ oder $R_5$ = $NO_2$, der andere $SO_3H$.

3. Die 1:1 – Nickel- oder Kupferkomplexe und die 1:2 – Eisenkomplexe der Farbstoffe der Ansprüche 1 und 2.

4. Verwendung der Farbstoffe der Ansprüche 1–3 zum Färben und Bedrucken von stickstoffhaltigen Materialien.

**Revendications**

1. Complexes métalliques de colorants bisazoïques de formule

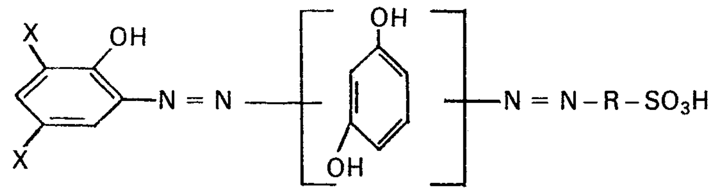

dans laquelle un reste X représente le chlore, l'autre reste X représente un groupe $NO_2$ ou les deux restes X représentent le chlore, R représente le reste d'un composant diazoïque de la série du benzène, du naphtalène ou de la diphénylamine, exempt de groupes formant des complexes métalliques en position o par rapport au groupe azo, les groupes azo n'étant pas en position m par rapport aux groupes OH du reste résorcinol.

2. Complexes métalliques de la revendication 1, dans lesquels $-R-SO_3H$ représente

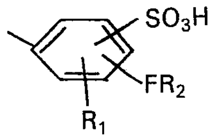

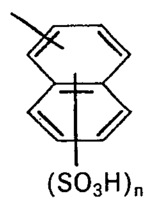

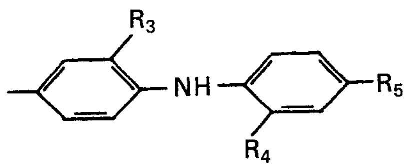

où

$R_1$, $R_2$ = H, Cl, $CH_3$, $OCH_3$, $SO_3H$ ou $NO_2$, ou bien COOH non fixé en position o par rapport au groupe azo

n = 1 ou 2

$R_3$ = H, $SO_3H$

$R_4$, $R_5$ = H ou bien l'un des restes $R_4$ et $R_5$ est l'hydrogène et l'autre représente Cl ou $OCH_3$, ou bien l'un des restes $R_4$ et $R_5$ est un groupe $NO_2$ et l'autre est un groupe $SO_3H$.

3. Les complexes de nickel ou de cuivre 1:1 et les complexes de fer 1:2 des colorants des revendications 1 et 2.

4. Utilisation des colorants des revendications 1–3, pour la teinture et l'impression de matières azotées.

**Claims**

1. Metal complexes of disazo dyestuffs of the formula

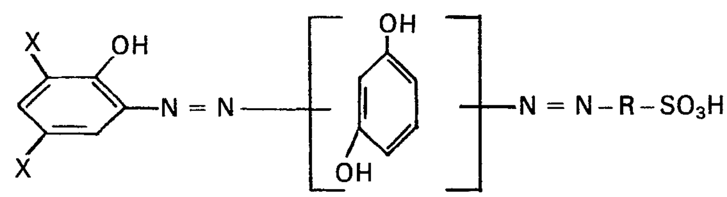

wherein

one X = chlorine and the other X = $NO_2$, or both the radicals X = chlorine, and R = the radical of a diazo component of the benzene, naphthalene or diphenylamine series which, in the o-position relative to the azo group, is free from groups which form metal complexes, the azo groups not being in the m-position relative to the OH groups of the resorcin radical.

2. Metal complexes of Claim 1, wherein

$-R-SO_3H$ =

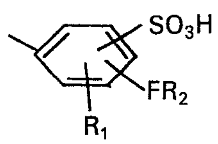

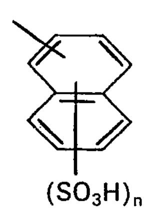

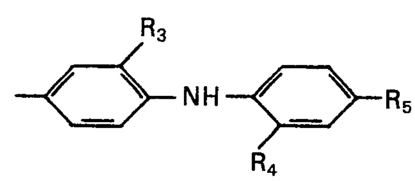

wherein

$R_1$ and $R_2$ = H, Cl, $CH_3$, $OCH_3$, $SO_3H$ or $NO_2$, or COOH which is not in the o-position relative to the azo group,

n = 1 or 2,

$R_3$ = H or $SO_3H$ and

$R_4$ and $R_5$ = H, or one of the radicals $R_4$ and $R_5$ = H and the other radical $R_4$ or $R_5$ = Cl or $OCH_3$, or one of the radicals $R_4$ and $R_5$ = $NO_2$ and the other radical $R_4$ or $R_5$ = $SO_3H$.

3. The 1:1 nickel or copper complexes and the 1:2 iron complexes of the dyestuffs of Claims 1 and 2.

4. Use of the dyestuffs of the Claims 1–3 for dyeing and printing nitrogen-containing materials.